(19) Europäisches Patentamt
European Patent Office
Office européen des brevets

(11) **EP 4 454 628 B1**

(12) **EUROPEAN PATENT SPECIFICATION**

(45) Date of publication and mention
of the grant of the patent:
**22.04.2026   Bulletin 2026/17**

(21) Application number: **24172885.6**

(22) Date of filing: **28.04.2024**

(51) International Patent Classification (IPC):
***A61H 3/00*** (2006.01)

(52) Cooperative Patent Classification (CPC):
**A61H 1/0266; A61H 3/00;** A61H 2201/1215;
A61H 2201/149; A61H 2201/1642; A61H 2201/165;
A61H 2201/1664; A61H 2201/5007;
A61H 2201/5061; A61H 2201/5069

(54) **POWERED ANKLE EXOSKELETON WITH  SERIES-ELASTIC ACTUATION**

ANGETRIEBENES KNÖCHELEXOSKELETT MIT SERIELL-ELASTISCHER BETÄTIGUNG

EXOSQUELETTE DE CHEVILLE MOTORISÉ À ACTIONNEMENT ÉLASTIQUE EN SÉRIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.04.2023   US 202363462843 P
25.04.2024   US 202418646639**

(43) Date of publication of application:
**30.10.2024   Bulletin 2024/44**

(73) Proprietor: **University of Utah Research
Foundation
Salt Lake City, UT 84108 (US)**

(72) Inventors:
• **SARKISIAN, Sergei
Salt Lake City, 84112 (US)**
• **LENZI, Tommaso
Salt Lake City, 84112 (US)**
• **GABERT, Lukas
Salt Lake City, 84112 (US)**
• **ORTOLANO, Brendon
Salt Lake City, 84112 (US)**

(74) Representative: **Hepworth Browne
15 St. Pauls Street
Leeds LS1 2JG (GB)**

(56) References cited:
**WO-A1-2023/287960      CN-A- 110 292 507
US-A1- 2021 015 637**

**Description**

**CROSS-REFERENCE TO RELATED APPLICATIONS**

This application claims priority to United States Patent Application No. 18/646,639, filed April 25, 2024, and titled "Powered Ankle Exoskeleton with Series-Elastic Actuation," which claims priority to and the benefit of United States Provisional Patent Application No. 63/462,843, filed April 28, 2023, and titled "Powered Ankle Exoskeleton with Series-Elastic Actuation".

**STATEMENT REGARDING FEDERALLY SPONSORED RESEARCH**

This invention was made with government support under 2046287 awarded by the National Science Foundation. The government has certain rights in the invention.

**BACKGROUND**

Powered exoskeletons are a rapidly evolving technology with the potential to greatly enhance human capabilities. Exoskeletons include an external framework that is worn by the user and an electromechanical actuator that provides torque at the joint level. The exoskeleton torque can augment the movements of the user as needed for rehabilitation and physical therapy, for military and industrial use, or assistance in everyday life. Substantial effort is currently spent researching and developing powered exoskeletons that can operate in the real world.

A fundamental challenge limiting the real-world usability of powered exoskeletons, especially lower-limb exoskeletons, is that adding mass to the body increases the metabolic effort needed to walk. Specifically, walking metabolic effort increases proportionally to the exoskeleton mass. Moreover, mass added distally to the user's body center of mass has a much greater negative effect than mass added proximally, so adding mass at the ankle/foot is four times more costly than at the trunk (See Browning et al. "The effects of adding mass to the legs on the energetics and biomechanics of walking," Med Sci Sports Exerc, vol. 39, no. 3, pp. 515-525, 2007). Therefore, the negative effect of added distal mass poses a particularly difficult design challenge for powered ankle exoskeletons, due to the distal location of the assisted joint.

To mitigate the negative effect of the exoskeleton mass on the user's metabolic effort, researchers have proposed designs that attempt to minimize the exoskeleton mass worn at the user's leg. For example, batteries and control electronics are commonly placed in external boxes worn above the waist. In a few cases, the whole actuation system, including the electrical motors, is remotely located at the waist/trunk level. Unfortunately, this approach requires wearing a pack and having long wires and/or cables running down the user's leg(s). Thus, while moving part of the exoskeleton mass to the trunk/back can decrease the negative effect of the exoskeleton mass, it limits practical, real-world usability.

Minimizing the actuation weight is another approach to decreasing the negative effect of the exoskeleton mass. Some exoskeletons attempt to minimize the exoskeleton mass using cable-driven actuators. Cables are generally lightweight and allow for a high range of motion. However, they can only transmit power in one direction via tension. Therefore, two actuators are needed to achieve bidirectional actuation with cable systems. Additionally, cables (especially Bowden cable systems) suffer from poor mechanical efficiency and limited durability, which are essential for real-world exoskeleton use. Some researchers have proposed using a hydraulic piston-cylinder system and pneumatic actuators powered by a portable $CO_2$ tank. However, such exoskeletons are not lighter than conventional systems using electromechanical actuators.

Accordingly, minimizing exoskeleton mass without negatively affecting output power and efficiency remains an ongoing challenge. US2021/015637A1 discloses an assistance device to assist a joint motion of a lower limb. The assistance device includes a driving part, an elastic part, and a crank mechanism. The driving part includes a motor and a transmission mechanism to change a speed of the motor and converts a rotational motion of the motor into a linear motion. The elastic part includes at least: a series spring provided in series between the transmission mechanism and the crank mechanism, a first parallel spring provided between the driving part and the ankle part, and a second parallel spring provided between the ankle part and the foot part. The crank mechanism is provided between the driving part and the foot part and converts the linear motion to a rotational motion while changing a deceleration coefficient according to an ankle angle.

**SUMMARY**

Disclosed herein is a lightweight powered ankle exoskeleton with integrated series-elastic actuation capable of providing high torque and power densities while maintaining a compact and lightweight profile. The device includes lightweight self-aligning mechanisms in the form of one or more pDOFs to provide secure yet comfortable fit to the user. For example, the pDOFs can beneficially provide self-alignment of the device to the user's anatomy, can account for anatomical differences across different users, can provide the user greater freedom of movement, and can increase user comfort while using the device.

In one embodiment, a powered ankle exoskeleton comprises: a frame configured to be worn adjacent a lower leg of a user; a power transmission assembly integrated with the frame and configured to deliver torque to a crank member to rotate the crank member about an ankle joint; and a foot/shoe interface coupled to the crank member and configured to interface with a foot or shoe of the user and to transmit torque generated at the ankle joint to the foot or shoe of the user. The power transmission assembly comprises a slider-crank configuration with series-elastic actuation.

The power transmission assembly can include: a motor and a power screw (e.g., a ball screw) mechanically coupled to the motor. The motor drives rotation of a shaft of the power screw which drives linear motion of a nut assembly of the power screw. The linear motion of the nut assembly defines a linear axis. A first end of a spring is coupled to the nut assembly and a second end of the spring is coupled to an end-effector. The end-effector is configured to move along the linear axis to drive rotation of the crank member via a coupler.

This summary is provided to introduce a selection of concepts in a simplified form that are further described below in the detailed description. This summary is not intended to identify key features or essential features of the claimed subject matter, nor is it intended to be used as an indication of the scope of the claimed subject matter.

## BRIEF DESCRIPTION OF THE DRAWINGS

Various objects, features, characteristics, and advantages of the disclosure will become apparent and more readily appreciated from the following description, taken in conjunction with the accompanying drawings and the appended claims, all of which form a part of this specification. In the Drawings, like reference numerals may be utilized to designate corresponding or similar parts in the various Figures, and the various elements depicted are not necessarily drawn to scale, wherein:

Figure 1 illustrates an example of a powered ankle exoskeleton comprising a frame with which a power transmission assembly is integrated and a foot/shoe interface to interface with the foot or shoe of the user;

Figure 2A is another view of the powered ankle exoskeleton with the frame and shoe removed to illustrate components of the power transmission assembly;

Figure 2B is a more detailed view of the distal elements of the drivetrain of the powered ankle exoskeleton;

Figure 2C is an exploded view of the nut assembly, spring, and end-effector of the drivetrain to illustrate an example means of attaching these components via threaded components that match the diameter and pitch of the spring;

Figures 3A and 3B illustrate how linear motion of the nut assembly and end-effector translate to torque and rotational motion at the ankle joint;

Figures 4A and 4B illustrate example passive degrees of freedom (pDOFs) that can be incorporated into the powered ankle exoskeleton;

Figures 5A-5E are detailed views of the pDOFs associated with the crank member and the foot/shoe interface;

Figures 6A-6C are detailed views of the pDOFs associated with the frame, shin cuff, and link member; and

Figure 7 is a schematic illustration of an example controller configuration.

## DETAILED DESCRIPTION

### Overview

Disclosed herein is a lightweight powered ankle exoskeleton with integrated series-elastic actuation, batteries, and electronics. The disclosed powered ankle exoskeleton includes features that enable high torque and power densities. The device includes a lightweight, high-torque series elastic actuator integrated into an exoskeleton frame, with further integration of batteries, electronics, and lightweight self-aligning mechanisms to provide a comfortable fit to the user.

The power transmission assembly and actuation kinematics of the disclosed powered ankle exoskeleton provide a convenient, self-contained design that does not require an external power source such as external batteries, external cable-driving systems (for cable-based designs), or external compressed air (for pneumatic actuator designs). Additional benefits are discussed below and include a device with high torque and power density, pDOFs to keep the device firmly but comfortably positioned against the lower leg, and a power transmission assembly that provides effective series-elastic actuation with a single spring in a simple, compact design.

The simple and effective design of the powered ankle exoskeleton beneficially provides high torque and power density while maintaining a compact and lightweight profile. For example, the overall mass of the device can be 1.3 kg or less, with the specific embodiment illustrated herein weighing about 1.24 kg.

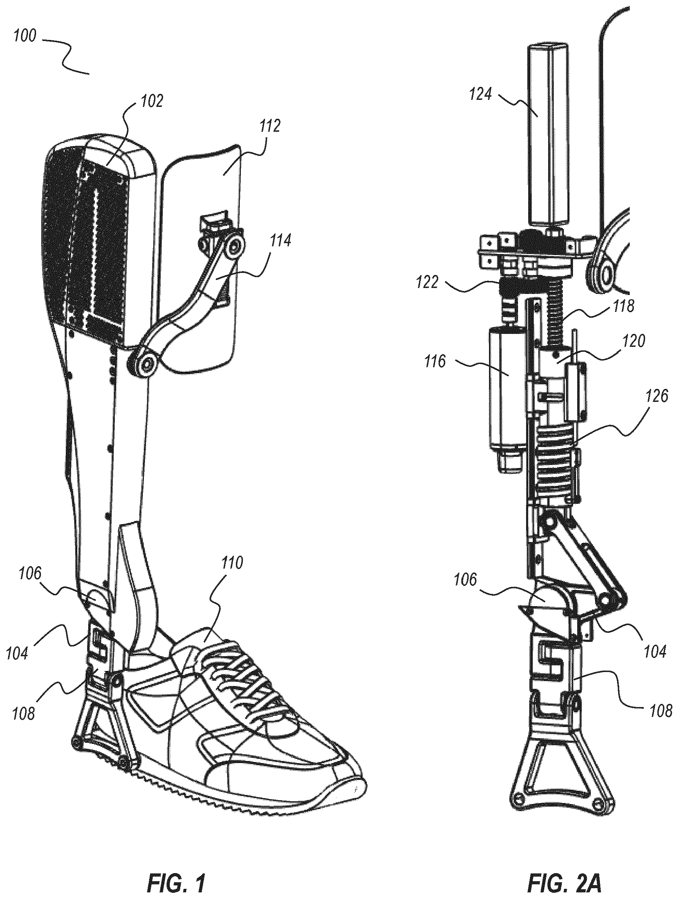

Figure 1 illustrates an example of the powered ankle exoskeleton 100. The powered ankle exoskeleton 100 includes a frame 102 that is configured to be worn adjacent a lower leg of the user (not shown). For example, the frame 102 can be configured to be worn adjacent the medial or lateral side of the lower leg of the user. Examples illustrated herein show the frame 102 positioned on the lateral side of the lower leg of the user. A power transmission assembly is integrated with the frame 102 and is configured to deliver torque to a crank member 104 to rotate the crank member 104 about an ankle joint 106.

The power transmission assembly comprises a slider-crank configuration with series-elastic actuation. For example, the power transmission assembly can include an offset slider-crank four-bar linkage kinematic configuration with series-elastic actuation provided by a spring integrated with the linear actuator portion of the assembly. In an offset configuration, the ankle joint is not aligned with the linear axis defined by the slider's movement.

A foot/shoe interface 108 is coupled to the crank member 104. The foot/shoe interface 108 is configured to interface with a foot or shoe of the user (such as illustrated shoe 110) and to transmit the torque generated at the ankle joint 106 to the foot or shoe of the user.

As shown, the foot/shoe interface 108 can attach to a heel portion of the shoe 110 (or other footwear). In other embodiments, the foot/shoe interface 108 can additionally or alternatively attach to other portions of the foot or shoe of the user. Although most applications will involve attachment to a shoe 110 rather than direct engagement with the user's foot, some embodiments may include features that are comfortable enough to engage with the user's foot without necessarily requiring shoes. For example, the foot/shoe interface 108 may include a strap, band, wrap, pad, and/or other structure(s) to engage appropriately with the user's foot. As described in more detail below, the foot/shoe interface 108 can be configured with one or more passive degrees of freedom to enable free movement of the foot/shoe of the user relative to the ankle joint 106.

The powered ankle exoskeleton 100 also includes a shin cuff 112 configured to be positioned on an anterior or posterior side of the lower leg, most typically on the anterior side such as illustrated. The shin cuff 112 can be coupled to the frame 102 via a link member 114. The shin cuff 112 and link member 114 can also provide one or more passive degrees of freedom to enable movement of the frame 102 relative to the shin cuff 112, as discussed in more detail below.

## Power Transmission Assembly

Figure 2A is another view of the powered ankle exoskeleton 100 with the frame 102 and shoe 110 removed to illustrate components of the power transmission assembly that are typically housed or covered by the frame 102. The power transmission assembly includes a motor 116 that is mechanically coupled to a power screw. Operation of the motor 116 drives rotation of a shaft 118 of the power screw, which drives linear motion of a nut assembly 120 of the power screw. The power screw is preferably configured as a ball screw, which is a type of power screw where the nut assembly 120 includes ball bearings that roll along the threads of the shaft 118, causing the nut assembly 120 to move linearly along the shaft. The linear motion of the nut assembly defines a linear axis. As described in greater detail below, the linear motion of the power screw is translated to rotational motion of the crank member 104 about the ankle joint 106.

As shown, the motor 116 can be oriented with its rotational axis substantially parallel to the linear axis defined by the power screw. Although other motor orientations can be utilized, a parallel orientation typically better matches the allowed space of the frame 102, which is informed by the general shape of the lower leg. A gear assembly 122 can transmit the motor shaft rotation to the shaft 118 of the power screw. Any suitable gear assembly can be utilized to achieve a desired gear ratio, and the gear assembly 122 can vary based on application needs, individual preferences, and/or according to specifications of the motor 116.

The power transmission assembly can also include a power source, such as battery 124. In some embodiments, the linear series-elastic design can be operated in a way that captures a portion of the motion of the actuation system to recharge the battery 124. The power source is used to power the motor 116, the controller (not shown) and its associated electronics, and a set of sensors used to measure, for example, position and orientation of the ankle joint 106, deflection of spring 126, and position and velocity of the motor 116.

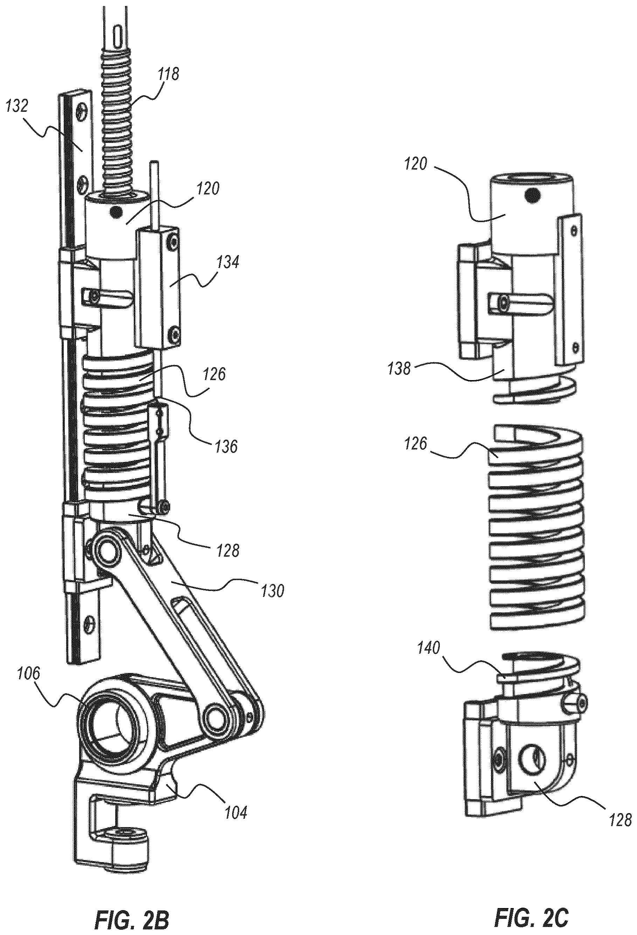

Figure 2B provides a more detailed view of the distal elements of the drivetrain. As shown, a first end of the spring 126 is coupled to the nut assembly 120 and a second end of the spring 126 is coupled to an end-effector 128. The end-effector 128, like the nut assembly 120, is configured to move along the linear axis and to drive rotation of the crank member 104 via a coupler 130. The coupler 130 includes a first end coupled to the end-effector 128 via a revolute joint and a second end coupled to an arm of the crank member 104 via a revolute joint. The coupler translates linear motion of the end-effector 128 to rotation of the crank member 104 about the ankle joint 106.

The nut assembly 120 and the end-effector 128 are slidably connected to a guide rail 132 that is configured to maintain movement of the nut assembly 120 and end-effector 128 along the linear axis.

The powered ankle exoskeleton 100 can also include a spring deflection sensor. For example, the illustrated embodiment includes a linear potentiometer positioned with potentiometer 134 and shaft 136 on opposite sides of the spring 126. That is, the potentiometer 134 can be fixed to the nut side of the spring 126, while the shaft 136 of the sensor can be connected to the end-effector side of the spring 126. These positions can be reversed in other embodiments. Additional or alternative linear displacement sensors, such as known in the art, may be included.

Figure 2C is an exploded view of the nut assembly 120, spring 126, and end-effector 128 to illustrate an example means of attaching these components. The nut assembly 120 can include a connector portion 138 to couple to the first end of the spring 126. The connector portion 138 includes threads that match a pitch and diameter of the spring 126. This allows the first end of the spring 126 to be threaded onto the connector portion 138 to effectively couple the spring 126 to the nut assembly 120. Similarly, the end-effector 128 can comprise a threaded connector portion 140 to effectively couple to the second end of the spring 126 by threading the second end of the spring 126 onto the matching threads of the connector portion 140.

In the illustrated powered ankle exoskeleton 100, the spring 126 is the only spring in the power transmission assembly and is configured to provide both tension and compression along the linear axis. This enables a simple, compact design relative to other designs that utilize multiple springs. The powered ankle exoskeleton 100 does not, for example, require separate springs for tension and compression effects from the series-elastic element.

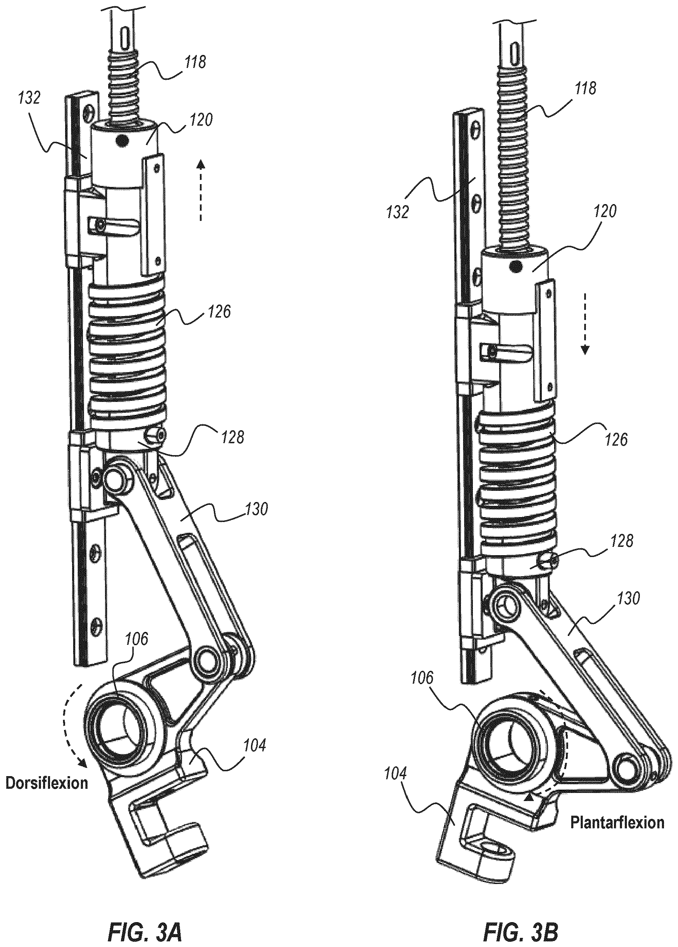

Figures 3A and 3B illustrate how linear motion of the nut assembly 120 and end-effector 128 translate to torque and rotational motion at the ankle joint 106. The frame 102, shoe 110, and certain other components are removed for purposes of illustration. In Figure 3A, rotation of shaft 118 drives upward linear motion of the nut assembly 120, which puts spring 126 under tension. The tension of spring 126 subsequently moves the end-effector 128 upward, which moves coupler 130 and thereby causes crank member 104 to rotate upward in a dorsiflexion motion.

In contrast, as show in Figure 3B, opposite rotation of shaft 118 drives downward linear motion of the nut assembly 120, which puts spring 126 under compression. The compression of spring 126 then moves the end-effector 128 downward, which moves coupler 130 and thereby causes crank member 104 to rotate downward in a plantarflexion motion.

**Passive Degrees of Freedom**

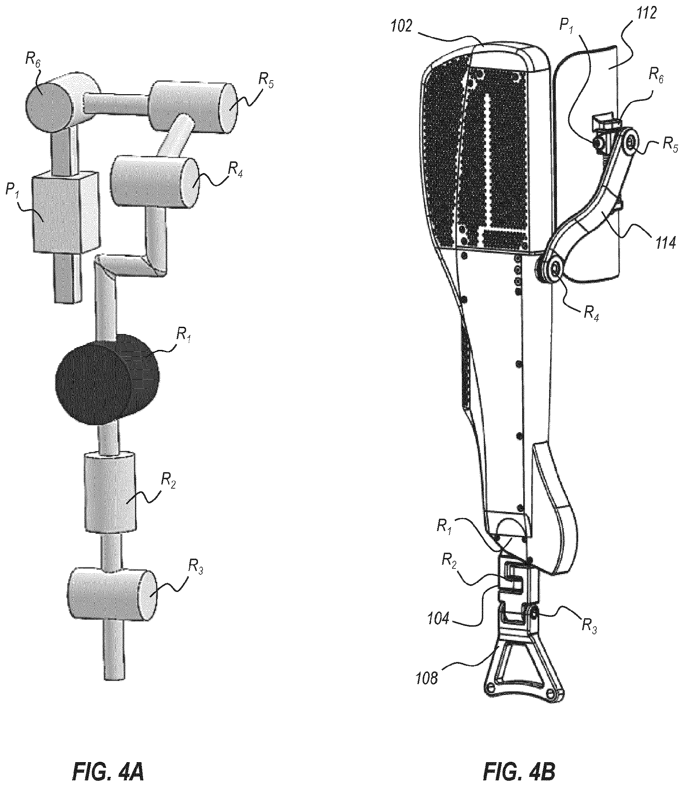

Figures 4A and 4B illustrate example pDOFs that can be incorporated into the powered ankle exoskeleton 100, with Figure 4A illustrating the pDOFs in schematic fashion and Figure 4B showing the locations of the corresponding pDOFs on the powered ankle exoskeleton 100. The pDOFs can beneficially provide self-alignment of the device to the user's anatomy, can account for anatomical differences across different users, can provide the user greater freedom of movement, and can increase user comfort while using the device, for example.

In Figures 4A and 4B, revolute joint R1 corresponds to ankle joint 106. Revolute joint R2 allows for relative rotation of the foot/shoe interface 108 and crank member 104 about the vertical axis (i.e., allows for foot abduction and adduction). Revolute joint R3 allows for relative rotation of the foot/shoe interface 108 and crank member 104 about an anterior/posterior axis (i.e., allows for foot eversion and inversion). Revolute joints R4 and R5 correspond to the connections of the link member 114 to the frame 102 and shin cuff 112, respectively. R4 and R5 allow relative rotation of the frame 102 and shin cuff 112 about anterior/posterior axes. Revolute joint R6 allows relative rotation of the frame 102 and shin cuff 112 about a medial/lateral axis. Prismatic joint P1 provides for relative vertical motion of the frame 102 and the shin cuff 112.

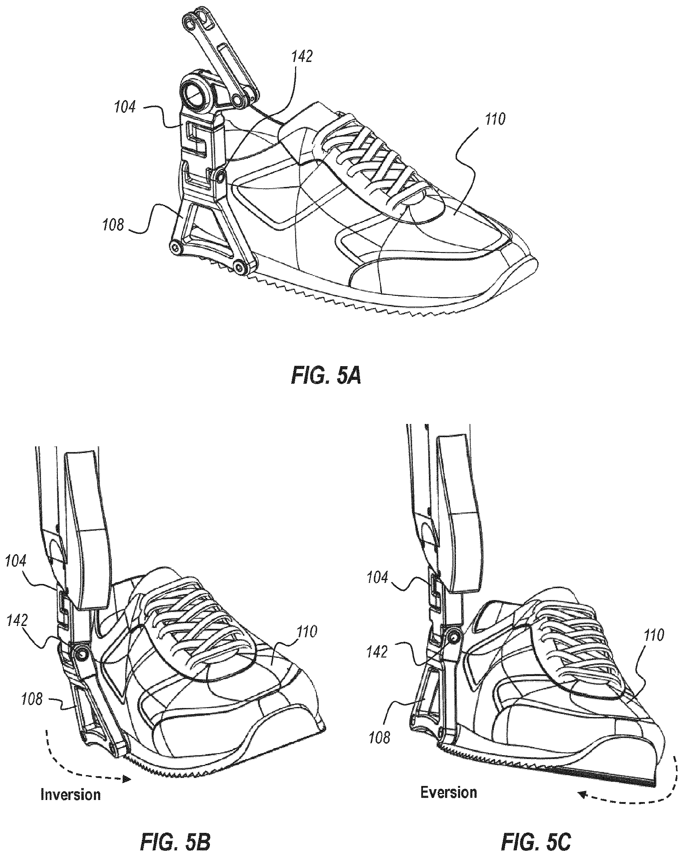

Figures 5A-5E are detailed views of the pDOFs associated with the crank member 104 and the foot/shoe interface 108. Figure 5A shows the shoe 110 and the foot/shoe interface 108 in a neutral position. Figure 5B shows that the foot/shoe interface 108 includes a hinge joint 142 (corresponding to R3 in Figures 4A and 4B) that allows inversion of the shoe 110 relative to the crank member 104. Figure 5C shows that joint 142 also allows eversion of the shoe 110 relative to the crank member 104.

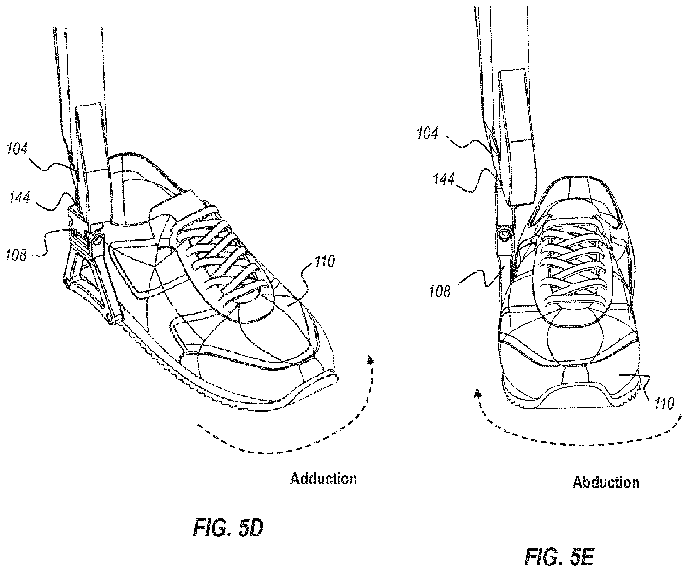

Figures 5D and 5E show that the foot/shoe interface 108 includes a hinge joint 144 (corresponding to R2 in Figures 4A and 4B) that allows for internal rotation (adduction) of the shoe 110 relative to the crank member 104 (Figure 5D) and external rotation (abduction) of the shoe 110 relative to the crank member 104 (Figure 5E).

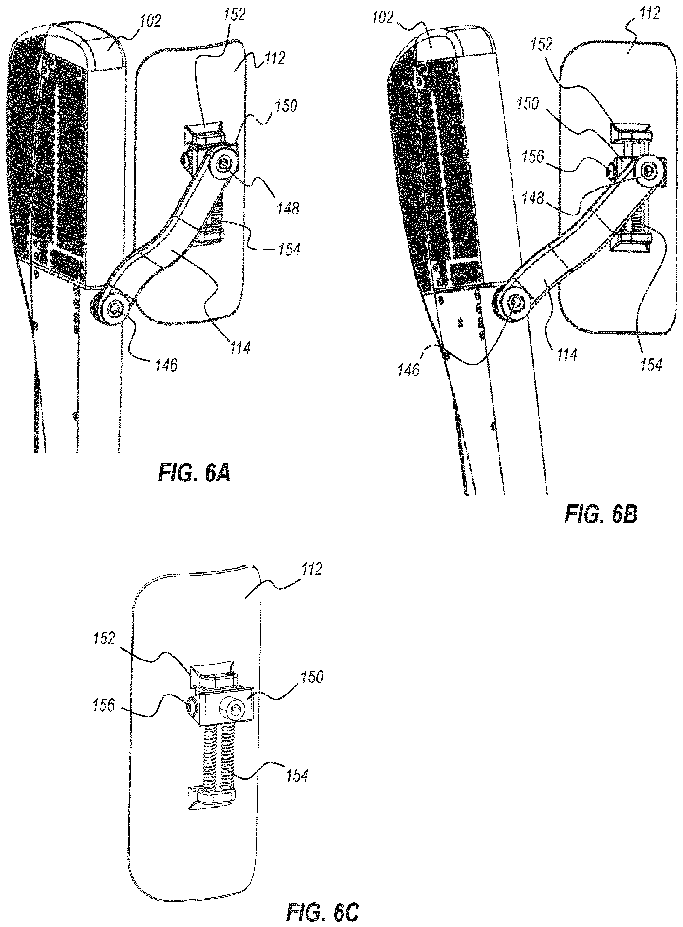

Figures 6A-6C are detailed views of the pDOFs associated with the frame 102, shin cuff 112, and link member 114. The link member 114 joins the frame 102 and shin cuff 112 at revolute joints 146 and 148 (corresponding to R4 and R5 in Figures 4A and 4B). The link member connections thus allow relative movement of the frame 102 and the shin cuff 112 about axes that are parallel to an anterior/posterior direction. This allows, for example, the frame 102 to be pivoted out and away from the shin cuff 112 and/or allows for the frame 102 to orient at an angle that best matches the angle of the user's lower leg (e.g., which may be wider close to the knee and taper to a smaller width closer to the foot).

The shin cuff 112 can also include a connector 150 to which the link member 114 attaches. The connector 150 can be configured as a slider slidably connected to corresponding guide 152 that enable vertical movement of the frame 102 relative to the shin cuff 112. Figure 6B shows the connector 150 moved downward. Because joint 148 of the link member 114 is connected to the connector 150, this allows the relative vertical movement of the frame 102 and shin cuff 112.

One or more biasing elements (e.g., one or more springs 154) can also be included to bias the connector 150 toward a default position upon the guide 152. In the illustrated embodiment, a set of springs 154 bias the connector 150 upward, which tends to rotate the link member 114 and bring the frame 102 closer to the shin cuff 112 in the absence of a counteracting force. That is, the shin cuff 112 tends to pull the frame 102 inward to maintain snug contact and fit against the user's leg, but also allows for deflection to accommodate user movements and adjustments.

The connector 150 can additionally or alternatively be configured to rotate about joint 156. Joint 156 enables relative rotation of the frame and the shin cuff along an axis parallel to a medial/lateral direction. Figure 6C illustrates the connector 150 and guide 152 with the link member 114 removed for better illustration.

The combination of (1) vertical displacement via connector 150, (2) rotation about joints 146 and 148 of link member 114, and (3) rotation about joint 156 of connector 150 provides a versatile range of relative movement that enables comfortable and mobile yet secure attachment to the user's lower leg.

**Example Controller & Electronics Features**

The powered ankle exoskeleton 100 can include various sensors to provide information and feedback to the controller. For example, the powered ankle exoskeleton 100 can include a joint position sensor (e.g., magnetic encoder) for measuring the position of the ankle joint 106, a joint orientation sensor for measuring the orientation of the ankle joint 106, a spring deflection sensor (e.g., the linear potentiometer disclosed herein), a motor position/velocity sensor (e.g., a magnetic rotary encoder), and other such sensors as are known in the art.

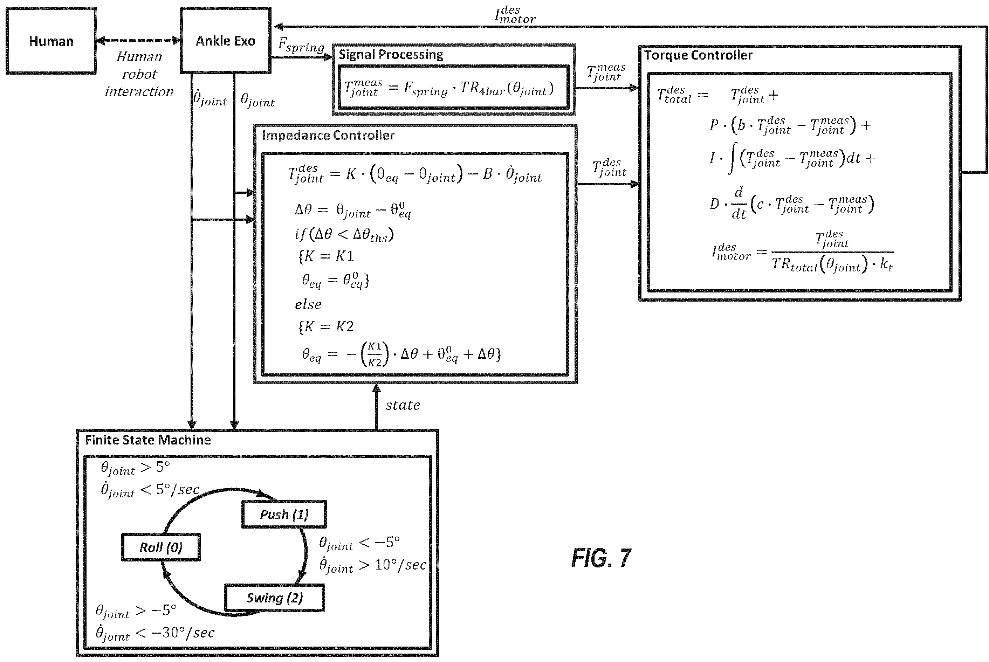

Figure 7 schematically illustrates an example controller configuration. For the low-level torque controller, the spring 126 can be utilized as a torque-sensing element. Using the linear potentiometer to measure the deflection of the spring 126, the force acting on the spring 126 and ball screw ($F_{\text{spring}}$) can be determined by multiplying the deflection of the spring 26 by its stiffness. The force acting on the ball screw can then be multiplied by the transmission ratio of the four-bar mechanism ($TR_{4\,\text{bar}}$), to estimate the torque at the output joint angle ($T_{\text{joint}}^{\text{meas}}$), as shown in equation (1):

$$T_{\text{joint}}^{\text{meas}} = F_{\text{spring}} \cdot TR_{4\,\text{bar}}\left(\theta_{\text{joint}}\right) \qquad (1)$$

The difference between the desired torque ($T_{\text{joint}}^{\text{des}}$) and the measured torque ($T_{\text{joint}}^{\text{meas}}$) provides the input for a PID regulator. The output of the PID regulator is added to a feedforward term ($T_{\text{joint}}^{\text{des}}$) to determine the total desired joint torque $T_{\text{total}}^{\text{des}}$, as shown in equation (2):

$$\begin{aligned} T_{\text{total}}^{\text{des}} = {} & \eta T_{\text{joint}}^{\text{des}} + P \cdot \left(T_{\text{joint}}^{\text{des}} - T_{\text{joint}}^{\text{meas}}\right) + \\ & I \cdot \frac{1}{s}\left(T_{\text{joint}}^{\text{des}} - T_{\text{joint}}^{\text{meas}}\right) + \\ & D \cdot s\left(T_{\text{joint}}^{\text{des}} - T_{\text{joint}}^{\text{meas}}\right) \end{aligned} \qquad (2)$$

The terms *P, I,* and *D* are the proportional, integral, and derivative gains, respectively. The values used for these gains can be determined through experimental tuning. Example values determined to be effective are *P* = 1.5, *I* = 1, and *D* = 0.133. $\eta$ is an efficiency term. The total desired joint torque is divided by the total transmission ratio ($TR_{\text{total}}$) and a motor torque constant ($k_t$) to obtain the desired motor current ($I_{\text{motor}}^{\text{des}}$), which is sent to the motor driver as shown in equation (3):

$$I_{\text{motor}}^{\text{des}} = \frac{T_{\text{joint}}^{\text{des}}}{TR_{\text{total}} \cdot k_t} \qquad (3)$$

For the high-level impedance controller, this example embodiment uses a finite-state machine that separates the gait cycle into three distinct states: *Roll(0), Push(1),* and *Swing(2),* as shown in Figure 7. The gait cycle starts at heel strike with the state *Roll. Roll* lasts while the foot is on the ground and the user is dorsiflexing. As the user begins to plantarflex his/her ankle, the finite state machine transitions to *Push.* The transition from *Roll* to *Push* occurs when the ankle joint position is greater than 5° and the ankle joint velocity is greater than 5°/s. From *Push*, the finite-state machine transitions to *Swing* when the ankle joint angle is less than -5° and the ankle joint velocity is greater than 10°/s. Finally, the transition from *Swing* to *Roll* occurs at approximately heel-strike when the ankle joint position is greater than -5° and ankle joint velocity is less than -30°/s.

The desired joint torque ($T_{\text{joint}}^{\text{des}}$) is determined by an impedance controller using the stiffness ($K$), damping ($B$), and equilibrium angle ($\theta_{\text{eq}}$) parameters, as shown in equation (4):

$$T_{\text{joint}}^{\text{des}} = K \cdot \left( \theta_{\text{eq}} - \theta_{\text{joint}} \right) - B \cdot \dot{\theta}_{\text{joint}} \qquad (4)$$

The specific values of *K, B,* and $\theta_{\text{eq}}$ can be adjusted for each gait state to provide different levels of torque during different parts of the gait cycle. Example values are provided in Table 1 below.

To imitate the stiffening trend of the human ankle during walking while maintaining a continuous desired torque output, a piecewise equation can be used as shown in equation (5):

$$\Delta\theta = \theta_{\text{joint}} - \theta_{eq}^0 \qquad (5)$$

$$\text{if} \left( \Delta\theta < \Delta\theta_{\text{ths}} \right)$$
$$\{ K = K1$$
$$\theta_{eq} = \theta_{eq}^0 \}$$
$$\text{else}$$
$$\{ K = K2$$
$$\theta_{eq} = -\left( \frac{K1}{K2} \right) \cdot \Delta\theta + \theta_{eq}^0 + \Delta\theta \}$$

In equation (5), *K1* and *K2* are different stiffness values, $\theta_{eq}^0$ is the desired equilibrium angle, and $\Delta\theta_{\text{ths}}$ is a deviation from the equilibrium angle. These parameters are used to switch the value of *K* in the impedance control equation such that the stiffness increases at large deviations from $\theta_{eq}^0$. Specifically, a value $\Delta\theta$ is calculated as the difference between the current ankle joint angle and $\theta_{eq}^0$. When $\Delta\theta$ is less than $\Delta\theta_{\text{ths}}$, the stiffness coefficient, *K,* is set to *K1* and $\theta_{eq}$ is the same as the provided value for $\theta_{eq}^0$. When $\Delta\theta$ becomes greater than $\Delta\theta_{\text{ths}}$ the stiffness coefficient, *K,* is changed from *K1* to *K2,* increasing the stiffness of the ankle exoskeleton. At the transition between states in the piecewise function, a new $\theta_{eq}$ is calculated to prevent a jump in the commanded torque. This function is designed to increase stiffness during the stance phase when the user is applying a significant torque to the exoskeleton, and thus creating a large deviation from the equilibrium point.

Table 1: Example Variable Stiffness Impedance Controller Parameters

|  | Roll (0) | Push (1) | Swing (2) |
|---|---|---|---|
| *K1* [Nm deg$^{-1}$] | 1 | 0.5 | 0.6 |
| *K2* [Nm deg$^{-1}$] | 3 | 2 | 0.6 |
| $\theta_{eq}^0$ [deg] | 2 | -100 | 0 |
| $\Delta\theta_{\text{ths}}$ [deg] | 3 | 2 | 1 |
| B [Nm deg$^{-1}$ s$^{-1}$] | 0.01 | 0.02 | 0.02 |

The controller disclosed herein can include one or more processors and computer-readable media such as computer memory stored on one or more hardware storage devices. The computer memory may store computer-executable instructions that when executed by one or more processors cause various functions to be performed, such as the acts recited herein. The term controller may also be referred to herein as "computer" or "computer system."

Computer-readable media can include any media that can be accessed by the controller. Physical computer-readable storage media includes RAM, ROM, EEPROM, optical or magnetic storage devices, or any other medium which can be used to store desired program code means in the form of computer-executable instructions or data structures and which can be accessed by a controller.

Controller functionality can additionally or alternatively be carried out by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), and the like.

The controller may be interconnected to one or more other computing systems via one or more network connections. Network connections may include, but are not limited to, connections via wired or wireless Ethernet, cellular connections, or even computer to computer connections through serial, parallel, USB, or other connections. The controller may be included in a distributed system environment in which local and remote computer systems, which are linked (either by hardwired data links, wireless data links, or by a combination of hardwired and wireless data links) through a network, both perform tasks. In a distributed system environment, program modules may be located in both local and remote memory storage devices.

**Additional Terms & Definitions**

Certain features are described herein in terms of anatomical directions relative to a user wearing the exoskeleton, such as an anterior/posterior direction and a medial/lateral direction. It will be understood that such directional relationships need not be exactly parallel to their anatomical counterparts, and tolerances are included to account for anatomical differences between users, shifting of the exoskeleton position during use, and the like.

While certain embodiments of the present disclosure have been described in detail, with reference to specific configurations, parameters, components, elements, etcetera, the descriptions are illustrative and are not to be construed as limiting the scope of the claimed invention.

Furthermore, it should be understood that for any given element of component of a described embodiment, any of the possible alternatives listed for that element or component may generally be used individually or in combination with one another, unless implicitly or explicitly stated otherwise.

The various features of a given embodiment can be combined with and/or incorporated into other embodiments disclosed herein. Thus, disclosure of certain features relative to a specific embodiment of the present disclosure should not be construed as limiting application or inclusion of said features to the specific embodiment. Rather, it will be appreciated that other embodiments can also include such features.

In addition, unless otherwise indicated, numbers expressing quantities, constituents, distances, or other measurements used in the specification and claims are to be understood as optionally being modified by the term "about." When the terms "about," "approximately," "substantially," or the like are used in conjunction with a stated amount, value, or condition, it may be taken to mean an amount, value or condition that deviates by less than 20%, less than 10%, less than 5%, less than 1%, less than 0.1%, or less than 0.01% of the stated amount, value, or condition. At the very least, and not as an attempt to limit the application of the doctrine of equivalents to the scope of the claims, each numerical parameter should be construed in light of the number of reported significant digits and by applying ordinary rounding techniques.

Any headings and subheadings used herein are for organizational purposes only and are not meant to be used to limit the scope of the description or the claims.

It will also be noted that, as used in this specification and the appended claims, the singular forms "a," "an" and "the" do not exclude plural referents unless the context clearly dictates otherwise. Thus, for example, an embodiment referencing a singular referent (e.g., "widget") may also include two or more such referents.

The invention is defined by the appended claims. The embodiments disclosed herein should be understood as comprising/including disclosed components, and may therefore include additional components not specifically described. Optionally, the embodiments disclosed herein are essentially free or completely free of components that are not specifically described. That is, non-disclosed components may optionally be completely omitted or essentially omitted from the disclosed embodiments. For example, power transmission assembly components that are not specifically disclosed herein may optionally be omitted.

**Claims**

1. A powered ankle exoskeleton (100), comprising:

    a frame (102) configured to be worn adjacent a lower leg of a user;

a power transmission assembly integrated with the frame and configured to deliver torque to a crank member (104) to rotate the crank member (104) about an ankle joint (106), wherein the power transmission assembly comprises

a motor (116);
a power screw mechanically coupled to the motor (116), **characterised in that** the motor (116) drives rotation of a shaft (118) of the power screw which drives linear motion of a nut assembly (120) of the power screw, wherein the linear motion of the nut assembly (120) defines a linear axis;
a spring (126) comprising a first end and a second end, wherein the first end is coupled to the nut assembly (120) and wherein the spring (126) is configured to transmit forces along the linear axis; and
an end-effector (128) coupled to the second end of the spring (126), wherein the end-effector (128) is configured to move along the linear axis to drive rotation of the crank member (104) via a coupler (130); and

a foot/shoe interface (108) coupled to the crank member (104) and configured to interface with a foot or shoe of the user and to transmit torque generated at the ankle joint (106) to the foot or shoe of the user,
wherein the power transmission assembly comprises a slider-crank configuration with series-elastic actuation, and
wherein the spring (126) is the only spring (126) in the power transmission assembly and is configured to provide both tension and compression along the linear axis.

2. The powered ankle exoskeleton (100) of claim 1, wherein the power transmission assembly comprises an offset slider-crank four-bar linkage kinematic configuration with series-elastic actuation.

3. The powered ankle exoskeleton (100) of claim 1 or claim 2, wherein:

the power screw is configured as a ball screw; and/or
the coupler (130) includes a first end coupled to the end-effector (128) via a revolute joint and a second end coupled to an arm of the crank member via a revolute joint, wherein the coupler (130) translates linear motion of the end-effector (128) to rotation of the crank member (104) about the ankle joint (106).

4. The powered ankle exoskeleton (100) of any preceding claim, wherein the nut assembly (120) and the end-effector (128) are slidably connected to a guide rail (132), wherein the guide rail (132) is configured to maintain movement of the nut assembly (120) and end-effector (128) along the linear axis.

5. The powered ankle exoskeleton (100) of any preceding claim, wherein:

the nut assembly (120) comprises a connector portion (138) to couple to the first end of the spring (126), wherein the connector portion (138) includes threads that match a pitch and diameter of the spring (126), and wherein the first end of the spring (126) is threaded thereon; and/or
the end-effector (128) comprises a connector portion (140) to couple to the second end of the spring (126), wherein the connector portion (140) includes threads that match a pitch and diameter of the spring (126), wherein the second end of the spring is threaded thereon.

6. The powered ankle exoskeleton (100) of any preceding claim, further comprising a spring deflection sensor in the form of a linear potentiometer (134) positioned with potentiometer and shaft (136) of the potentiometer on opposite sides of the spring (126).

7. The powered ankle exoskeleton (100) of any preceding claim, further comprising a controller that is configured to:

measure position and velocity of the ankle joint (106) to determine a desired torque at the ankle joint (106);
determine a measured torque at the ankle joint (106) based on a determined spring force and based on current ankle joint position; and
using the desired torque and the measured torque, determine a command torque; and
send the command torque to the motor (116).

8. The powered ankle exoskeleton (100) of claim 7, wherein the controller is further configured to determine a gait state based on the measured position and velocity of the ankle joint (106), wherein the desired torque is determined according to the determined gait state.

9. The powered ankle exoskeleton (100) of any preceding claim, wherein the foot/shoe interface (108) comprises one or more passive degrees of freedom to enable movement of a foot/shoe of the user relative to the ankle joint, wherein the foot/shoe interface (108) comprises (1) a first passive degree of freedom that enables abduction and adduction of the foot/shoe, and/or (2) a second passive degree of freedom that enables eversion and inversion of the foot/shoe.

10. The powered ankle exoskeleton (100) of any preceding claim, wherein the frame (102) is configured to be positioned on a medial or lateral side of the lower leg, the powered ankle exoskeleton further comprising a shin cuff (112) configured to be positioned on an anterior or posterior side of the lower leg, wherein the shin cuff (112) is coupled to the frame (102) via a link member (114), and wherein the shin cuff (112) and link member (114) provide one or more passive degrees of freedom to enable movement of the frame (102) relative to the shin cuff (112).

11. The powered ankle exoskeleton (100) of claim 10, wherein the link member (114) includes a first end connected to the shin cuff (112) via a revolute connection and a second end connected to the frame via a revolute connection such that the link member (114) enables relative movement of the frame (102) and the shin cuff (112) about axes parallel to an anterior/posterior direction.

12. The powered ankle exoskeleton (100) of claim 10 or claim 11, wherein the link member (114) is coupled to the shin cuff (112) via a joint that is (1) configured as a prismatic joint that enables relative vertical movement of the frame (102) and the shin cuff (112), wherein the prismatic joint is optionally biased toward a default position, and/or (2) configured to enable relative rotation of the frame (102) and the shin cuff (102) along an axis parallel to a medial/lateral direction.

13. The powered ankle exoskeleton (100) of any preceding claim, wherein the foot/shoe interface (108) is configured to interface with a heel portion of a user's foot/shoe.

14. The powered ankle exoskeleton (100) of any preceding claim, wherein the powered ankle exoskeleton has a mass of 1.3 kg or less.


**Patentansprüche**

1. Ein motorisiertes Sprunggelenk-Exoskelett (100), umfassend:

   ein Rahmen (102), der so konfiguriert ist, dass er an einem Unterschenkel eines Benutzers getragen werden kann;
   eine Kraftübertragungsbaugruppe, die in den Rahmen integriert und so konfiguriert ist, dass sie Drehmoment an ein Kurbelelement (104) liefert, um das Kurbelelement (104) um ein Sprunggelenk (106) zu drehen, wobei die Kraftübertragungsbaugruppe umfasst
   einen Motor (116);
   eine mit dem Motor (116) mechanisch gekoppelte Antriebsschraube, **dadurch gekennzeichnet, dass** der Motor (116) die Drehung einer Welle (118) der Antriebsschraube antreibt, die eine lineare Bewegung einer Mutteranordnung (120) der Antriebsschraube antreibt, wobei die lineare Bewegung der Mutteranordnung (120) eine lineare Achse definiert;
   eine Feder (126) mit einem ersten Ende und einem zweiten Ende, wobei das erste Ende mit der Mutteranordnung (120) gekoppelt ist und wobei die Feder (126) so konfiguriert ist, dass sie Kräfte entlang der linearen Achse überträgt; und
   einen Endeffektor (128), der mit dem zweiten Ende der Feder (126) verbunden ist, wobei der Endeffektor (128) so konfiguriert ist, dass er sich entlang der linearen Achse bewegt, um die Drehung des Kurbelelements (104) über eine Kupplung (130) anzutreiben; und
   eine Fuß-/Schuh-Schnittstelle (108), die mit dem Kurbelelement (104) verbunden ist und so konfiguriert ist, dass sie mit einem Fuß oder Schuh des Benutzers in Verbindung steht und das am Sprunggelenk (106) erzeugte Drehmoment auf den Fuß oder Schuh des Benutzers überträgt,
   wobei die Kraftübertragungsbaugruppe eine Schieber-Kurbel-Konfiguration mit seriell-elastischer Aktivierung umfasst, und
   wobei die Feder (126) die einzige Feder (126) in der Kraftübertragungsbaugruppe ist und so konfiguriert ist, dass sie sowohl Zug- als auch Druckkraft entlang der linearen Achse bereitstellt.

2. Das motorisierte Sprunggelenk-Exoskelett (100) nach Anspruch 1, wobei die Kraftübertragungsbaugruppe eine versetzte Schieber-Kurbel-Viergelenk-Kinematik-Konfiguration mit seriell-elastischer Aktivierung umfasst.

3. Das motorisierte Sprunggelenk-Exoskelett (100) nach Anspruch 1 oder Anspruch 2, wobei:

   die Kraftschraube als Kugelumlaufspindel ausgebildet ist; und/oder
   die Kupplung (130) ein erstes Ende, das über ein Drehgelenk mit dem Endeffektor (128) verbunden ist, und ein zweites Ende, das über ein Drehgelenk mit einem Arm des Kurbelelements verbunden ist, umfasst, wobei die Kupplung (130) die lineare Bewegung des Endeffektors (128) in eine Drehung des Kurbelelements (104) um das Sprunggelenk (106) umsetzt.

4. Das motorisierte Sprunggelenk-Exoskelett (100) aus einem der vorstehenden Ansprüche, wobei die Mutteranordnung (120) und der Endeffektor (128) verschiebbar mit einer Führungsschiene (132) verbunden sind, wobei die Führungsschiene (132) so konfiguriert ist, dass sie die Bewegung der Mutteranordnung (120) und des Endeffektors (128) entlang der linearen Achse aufrechterhält.

5. Das motorisierte Sprunggelenk -Exoskelett (100) aus einem der vorstehenden Ansprüche, wobei:

   die Mutteranordnung (120) einen Verbindungsabschnitt (138) zum Verbinden mit dem ersten Ende der Feder (126) umfasst, wobei der Verbindungsabschnitt (138) Gewinde aufweist, die mit einer Steigung und einem Durchmesser der Feder (126) übereinstimmen, und wobei das erste Ende der Feder (126) darauf aufgeschraubt ist; und/oder
   der Endeffektor (128) einen Verbindungsabschnitt (140) zum Verbinden mit dem zweiten Ende der Feder (126) umfasst, wobei der Verbindungsabschnitt (140) Gewinde aufweist, die mit einer Steigung und einem Durchmesser der Feder (126) übereinstimmen, wobei das zweite Ende der Feder darauf aufgeschraubt ist.

6. Das motorisierte Sprunggelenk-Exoskelett (100) aus einem der vorstehenden Ansprüche, weiterhin umfassend einen Federauslenkungssensor in Form eines linearen Potentiometers (134), das mit dem Potentiometer und der Welle (136) des Potentiometers auf gegenüberliegenden Seiten der Feder (126) positioniert ist.

7. Das motorisierte Sprunggelenk-Exoskelett (100) aus einem der vorstehenden Ansprüche, weiterhin umfassend eine Steuerungsvorrichtung, die so konfiguriert ist, dass sie:

   die Position und Geschwindigkeit des Sprunggelenks (106) misst, um ein gewünschtes Drehmoment am Sprunggelenk (106) zu bestimmen;
   ein gemessenes Drehmoment am Sprunggelenk (106) auf der Grundlage einer ermittelten Federkraft und auf der Grundlage der aktuellen Sprunggelenkposition bestimmt; und
   unter Verwendung des gewünschten Drehmoments und des gemessenen Drehmoments ein Soll-Drehmoment bestimmt; und das Soll-Drehmoment an den Motor (116) sendet.

8. Das motorisierte Sprunggelenk-Exoskelett (100) nach Anspruch 7, wobei die Steuerungsvorrichtung ferner so konfiguriert ist, dass sie einen Gangzustand auf der Grundlage der gemessenen Position und Geschwindigkeit des Sprunggelenks (106) bestimmt, wobei das gewünschte Drehmoment entsprechend dem bestimmten Gangzustand bestimmt wird.

9. Das motorisierte Sprunggelenk-Exoskelett (100) aus einem der vorstehenden Ansprüche, wobei die Fuß-/Schuh-Schnittstelle (108) einen oder mehrere passive Freiheitsgrade umfasst, um eine Bewegung eines Fußes/Schuhs des Benutzers relativ zum Sprunggelenk zu ermöglichen, wobei die Fuß-/Schuh-Schnittstelle (108) (1) einen ersten passiven Freiheitsgrad umfasst, der eine Abduktion und Adduktion des Fußes/Schuhs ermöglicht, und/oder (2) einen zweiten passiven Freiheitsgrad umfasst, der eine Eversion und Inversion des Fußes/Schuhs ermöglicht.

10. Das motorisierte Sprunggelenk-Exoskelett (100) aus einem der vorstehenden Ansprüche, wobei der Rahmen (102) so konfiguriert ist, dass er an einer medialen oder lateralen Seite des Unterschenkels positioniert werden kann, wobei das motorisierte Sprunggelenk-Exoskelett ferner eine Schienbeinmanschette (112) umfasst, die so konfiguriert ist, dass sie an einer anterioren oder posterioren Seite des Unterschenkels positioniert werden kann, wobei die Schienbeinmanschette (112) über ein Verbindungselement (114) mit dem Rahmen (102) verbunden ist und wobei die Schienbeinmanschette (112) und das Verbindungselement (114) einen oder mehrere passive Freiheitsgrade bereitstellen, um eine Bewegung des Rahmens (102) relativ zur Schienbeinmanschette (112) zu ermöglichen.

11. Das motorisierte Sprunggelenk-Exoskelett (100) nach Anspruch 10, wobei das Verbindungselement (114) ein erstes Ende, das über eine Drehverbindung mit der Schienbeinmanschette (112) verbunden ist, und ein zweites Ende, das über eine Drehverbindung mit dem Rahmen verbunden ist, umfasst, sodass das Verbindungselement (114) eine relative Bewegung des Rahmens (102) und der Schienbeinmanschette (112) um Achsen parallel zu einer anterioren/posterioren Richtung ermöglicht.

12. Das motorisierte Sprunggelenk-Exoskelett (100) nach Anspruch 10 oder Anspruch 11, wobei das Verbindungselement (114) über ein Gelenk mit der Schienbeinmanschette (112) verbunden ist, (1) das Gelenk als Prismagelenk konfiguriert ist, das eine relative vertikale Bewegung des Rahmens (102) und der Schienbeinmanschette (112) ermöglicht, wobei das prismatische Gelenk optional in eine Standardposition vorgespannt ist und/oder (2) das Gelenk so konfiguriert ist, dass es eine relative Drehung des Rahmens (102) und der Schienbeinmanschette (112) entlang einer Achse parallel zur medialen/lateralen Richtung ermöglicht.

13. Das motorisierte Sprunggelenk-Exoskelett (100) aus einem der vorstehenden Ansprüche, wobei die Fuß-/Schuh-Schnittstelle (108) so konfiguriert ist, dass sie mit einem Fersenbereich des Fußes/Schuhs eines Benutzers verbunden werden kann.

14. Das motorisierte Sprunggelenk-Exoskelett (100) aus einem der vorstehenden Ansprüche, wobei das motorisierte Sprunggelenk-Exoskelett eine Masse von 1,3 kg oder weniger aufweist.


**Revendications**

1. Exosquelette de cheville à développement de puissance (100), comprenant :

   un châssis (102) configuré pour être porté de manière adjacente à une jambe inférieure d'un utilisateur ;
   un ensemble de transmission de puissance intégré au châssis et configuré pour livrer un couple à un organe formant manivelle (104) de manière à faire tourner l'organe formant manivelle (104) autour d'une articulation de cheville (106), selon lequel l'ensemble de transmission de puissance comprend :

   un moteur (116) ;
   une vis de puissance couplée mécaniquement au moteur (116), **caractérisée en ce que** le moteur (116) entraîne la rotation d'un arbre (118) de la vis de puissance, ce qui entraîne un mouvement linéaire d'un ensemble à noix (120) de la vis de puissance, selon lequel le mouvement linéaire de l'ensemble à noix (120) définit un axe linéaire ;
   un ressort (126) comprenant une première extrémité et une deuxième extrémité, selon lequel la première extrémité est couplée à l'ensemble à noix (120) et selon lequel le ressort (126) est configuré de manière à transmettre des efforts le long de l'axe linéaire ; et
   un effecteur terminal (128) couplé à la deuxième extrémité du ressort (126), selon lequel l'effecteur terminal (128) est configuré de manière à se déplacer le long de l'axe linéaire afin d'entraîner la rotation de l'organe formant manivelle (104) via un coupleur (130) ; et

   une interface formant pied ou chaussure (108) couplée à l'organe formant manivelle (104) et configurée de manière à s'interfacer avec un pied ou une chaussure de l'utilisateur et transmettre le couple généré au niveau de l'articulation de cheville (106) au pied ou à la chaussure de l'utilisateur,
   selon lequel l'ensemble de transmission de puissance comprend une configuration de système bielle-manivelle à actionnement élastique en série, et
   selon lequel le ressort (126) est l'unique ressort (126) de l'ensemble de transmission de puissance et est configuré de manière à fournir à la fois une tension et une compression le long de l'axe linéaire.

2. Exosquelette de cheville à développement de puissance (100) selon la revendication 1, selon lequel l'ensemble de transmission de puissance comprend une configuration cinématique en système bielle-manivelle décalé à quatre barres et à actionnement élastique en série.

3. Exosquelette de cheville à développement de puissance (100) selon la revendication 1 ou la revendication 2, selon lequel :

   la vis de puissance est configurée en tant que vis à billes ; et/ou
   le coupleur (130) comporte une première extrémité couplée à l'effecteur terminal (128) via une liaison pivot et une deuxième extrémité couplée à un bras de l'organe formant manivelle via une liaison pivot, selon lequel le coupleur (130) traduit le mouvement linéaire de l'effecteur terminal (128) en une rotation de l'organe formant manivelle (104) autour de l'articulation de cheville (106).

4. Exosquelette de cheville à développement de puissance (100) selon l'une quelconque des revendications précédentes, selon lequel l'ensemble à noix (120) et l'effecteur terminal (128) sont connectés coulissants à un rail guide (132), selon lequel le rail guide (132) est configuré de manière à maintenir le mouvement de l'ensemble à noix (120) et l'effecteur terminal (128) le long de l'axe linéaire.

5. Exosquelette de cheville à développement de puissance (100) selon l'une quelconque des revendications précédentes, selon lequel :

l'ensemble à noix (120) comprend une partie formant connecteur (138) afin de s'accoupler à la première extrémité du ressort (126), selon lequel la partie formant connecteur (138) comporte des filetages qui correspondent à un pas et un diamètre du ressort (126), et selon lequel la première extrémité du ressort (126) est vissée sur ce filetage ; et/ou
l'effecteur terminal (128) comprend une partie formant connecteur (140) afin de s'accoupler à la deuxième extrémité du ressort (126), selon lequel la partie formant connecteur (140) comporte des filetages qui correspondent à un pas et un diamètre du ressort (126), selon lequel la deuxième extrémité du ressort est vissée sur ce filetage.

6. Exosquelette de cheville à développement de puissance (100) selon l'une quelconque des revendications précédentes, comprenant en outre un capteur de fléchissement du ressort sous forme de potentiomètre linéaire (134) positionné de manière à présenter le potentiomètre et la tige du potentiomètre (136) sur des côtés opposés du ressort (126).

7. Exosquelette de cheville à développement de puissance (100) selon l'une quelconque des revendications précédentes, comprenant en outre un contrôleur configuré de manière à :

mesurer une position et une vitesse de l'articulation de cheville (106) afin de calculer un couple souhaité au niveau de l'articulation de cheville (106) ;
calculer un couple mesuré au niveau de l'articulation de cheville (106) sur la base d'un effort de ressort calculé et sur la base d'une position actuelle de l'articulation de cheville ; et
utiliser le couple souhaité et le couple mesuré pour calculer un couple de commande ; et
envoyer le couple de commande au moteur (116).

8. Exosquelette de cheville à développement de puissance (100) selon la revendication 7, selon lequel le contrôleur est en outre configuré de manière à calculer un état de démarche sur la base de la position mesurée et de la vitesse de l'articulation de cheville (106), selon lequel le couple souhaité est calculé en fonction de l'état calculé de la démarche.

9. Exosquelette de cheville à développement de puissance (100) selon l'une quelconque des revendications précédentes, selon lequel l'interface de pied ou chaussure (108) comprend un ou plusieurs degrés passifs de liberté afin de permettre un mouvement du pied ou de chaussure de l'utilisateur par rapport à l'articulation de cheville, selon lequel l'interface de pied ou de chaussure (108) comprend (1) un premier degré passif de liberté permettant une abduction et une adduction du pied ou de la chaussure, et/ou (2) un deuxième degré passif de liberté permettant une éversion et une inversion du pied ou de la chaussure.

10. Exosquelette de cheville à développement de puissance (100) selon l'une quelconque des revendications précédentes, selon lequel le châssis (102) est configuré de manière à être positionné sur un côté médial ou latéral de la jambe inférieure, l'exosquelette de cheville à développement de puissance comprenant en outre un manchon de tibia (112) configuré de manière à être positionné sur un côté antérieur ou postérieur de la jambe inférieure, selon lequel le manchon de tibia (112) est couplé au châssis (102) via un organe formant liaison (114), et selon lequel le manchon de tibia (112) et l'organe formant liaison (114) fournissent un ou plusieurs degrés passifs de liberté permettant un mouvement du châssis (102) par rapport au manchon de tibia (112).

11. Exosquelette de cheville à développement de puissance (100) selon la revendication 10, selon lequel l'organe formant liaison (114) comporte une première extrémité connectée au manchon de tibia (112) via une liaison pivot et une deuxième extrémité connectée au châssis via une liaison pivot de sorte que l'organe formant liaison (114) permette un mouvement relatif du châssis (102) et du manchon de tibia (112) autour d'axes parallèles à une direction antérieure ou postérieure.

12. Exosquelette de cheville à développement de puissance (100) selon la revendication 10 ou la revendication 11, selon lequel l'organe formant liaison (114) est couplé au manchon de tibia (112) via une articulation qui est (1) configurée en tant qu'articulation prismatique permettant un mouvement vertical relatif du châssis (102) et du manchon de tibia (112), selon lequel l'articulation prismatique est biaisée de manière optionnelle en direction d'une position par défaut, et/ou (2) configurée de manière à permettre un mouvement relatif de rotation du châssis (102) et du manchon de tibia (102) le long d'un axe parallèle à une direction médiale ou latérale.

13. Exosquelette de cheville à développement de puissance (100) selon l'une quelconque des revendications précédentes, selon lequel l'interface de pied ou de chaussure (108) est configurée de manière à s'interfacer avec une partie formant talon du pied ou de la chaussure d'un utilisateur.

14. Exosquelette de cheville à développement de puissance (100) selon l'une quelconque des revendications précédentes, selon lequel l'exosquelette de cheville à développement de puissance présente une masse inférieure ou égale à 1,3 kg.

**FIG. 1**

**FIG. 2A**

**FIG. 2B**

**FIG. 2C**

FIG. 3A

FIG. 3B

FIG. 4A

FIG. 4B

FIG. 5A

Inversion

FIG. 5B

Eversion

FIG. 5C

Adduction

**FIG. 5D**

Abduction

**FIG. 5E**

FIG. 6A

FIG. 6B

FIG. 6C

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 64663924
- US 63462843

- US 2021015637 A1

**Non-patent literature cited in the description**

- **BROWNING et al.** The effects of adding mass to the legs on the energetics and biomechanics of walking. *Med Sci Sports Exerc*, 2007, vol. 39 (3), 515-525